# EUROPÄISCHE PATENTANMELDUNG

(11) **EP 0 939 302 A1**
(43) Veröffentlichungstag der Anmeldung: **01.09.1999**
(21) Anmeldenummer: 98121649.2
(22) Anmeldetag: 12.11.1998
(51) Int. Cl.: G01F 1/684, G01F 1/696

(54) **Messelement und Verfahren zu seiner Herstellung**

(30) Priorität: 27.02.1998 DE 19808249
(71) Anmelder: Pierburg Aktiengesellschaft, 41460 Neuss (DE)
(72) Erfinder: Liedtke, Günter, 45239 Essen (DE); Wienecke, Thomas, 41352 Korschenbroich (DE); Lösing, Karl-Heinrich Dr., 46519 Alpen (DE)

(57) **Zusammenfassung**

Meßelement zur Bestimmung der Masse eines strömenden Mediums sowie ein Verfahren zur Herstellung des Meßelementes, bei dem der Heizsensor (7,11) und der Temperatursensor (8,17) durch getrennte Membranen (3,4) auf dem Substrat (2) voneinander getrennt sind. Das Substrat (2) besteht aus Silizium, die Membranen (3,4) sind Siliziumoxydschichten, in die die Sensoren (7,8) eingebettet sind. Durch die Anwendung der Halbleiter- bzw. Siliziumtechnologie sind auch mehrere Heizsensoren (7,11) und Temperatursensoren (8,17) in die Membranen (3,4) integrierbar. Die Membranen (3,4) schützen dabei die Sensoren (7,8,11,17) vor Verschmutzung.

## Beschreibung

Die Erfindung betrifft ein Meßelement zur Bestimmung der Masse eines strömenden Mediums, inbesondere für einen Luftmassensensor nach dem Oberbegriff des Patentanspruchs 1 sowie ein Verfahren zur Herstellung eines solchen Meßelementes.

Es ist schon ein Meßelement der gattungsgemäßen Art bekannt und in der DE 43 08 227 A1 beschrieben. Das Meßelement weist dabei ein Substrat auf, das in einem Befestigungsbereich gehalten wird und einen Schlitz besitzt. Auf einer durch den Schlitz entstehenden Lippe befindet sich oberhalb auf der Lippe ein Meßwiderstand und unterhalb ein Heizwiderstand. Auf der anderen Lippe ist ein temperaturabhängiger Kompensationswiderstand aufgebracht. Durch das Einbringen des Schlitzes wird ein Auftreten der Meßfehler verringert. Zur Ermittlung der Strömungsrichtung müssen zwei separate Meßelemente verwendet werden.

Aus der DE 39 11 599 A1 ist eine Widerstandsanordnung bekannt, bei der ein durch elektrischen Strom beheizbarer Sensorwiderstand auf einem Isolierträger, vorzugsweise Keramik, angeordnet ist. Dieser Sensorwiderstand ragt in einen zu messenden Medienstrom hinein und wird von einer Halterung gehalten. Zwischen dem Sensorwiderstand und der Halterung befindet sich zusätzlich ein weiterer Heizwiderstand, der von einem weiteren elektrischen Strom derart beheizbar ist, daß mindestens der an den Sensorwiderstand angrenzende Bereich des Heizwiderstandes im wesentlichen die Temperatur des Sensorwiderstandes annimmt. Dadurch wird erreicht, daß ein durch die Widerstandsanordnung gebildetes Heißfilmanemometer einer sprunghaften Änderung des Medienflusses möglichst schnell folgt und auch kurze Stabilisierungszeiten nach dem Einschalten aufweist.

Die Aufgabe der Erfindung besteht darin, ein Meßelement der gattungsgemäßen Art anzugeben, bei dem ein Meßfehler durch Wärmeeinwirkung auf den Heizwiderstand vermieden wird. Eine weitere Aufgabe besteht darin, ein Verfahren zur Herstellung eines solchen Meßelementes anzugeben.

Gelöst werden die Aufgaben durch die im Anspruch 1 enthaltenen Merkmale sowie den Merkmalen im Anspruch 10.

Durch das Aufbringen sehr dünner Membrane auf ein Substrat wird einerseits die abfließende Wärme geringgehalten und außerdem die wärmeträge Masse minimiert. Durch die geringe Wärmekapazität der Membrane und der Heizstruktur werden zudem geringe Einschaltzeiten sowie eine hohe Dynamik des Meßelementes realisiert. Diese Dynamik ist für die Anwendung bei Massenstrommessungen mit Rückströmung vorteilhaft, da sich die Strömung bei Richtungsumkehr bis zum Stillstand verlangsamt und dementsprechend auch der Sensor bzw. das Meßelement sich sehr schnell seiner Wärme entledigen muß und keine Restwärme behalten darf.
Ein Temperaturübertrag erfolgt nicht, wodurch Meßfehler vermieden werden.

Vorteilhafte Ausführungen sind in den Unteransprüchen enthalten.
Durch die Verwendung von Silicium als Substrat und Siliciumoxyd als Membrane, auf denen die Temperatur und Heizsensoren jeweils aufgebracht sind, ist das Meßelement in Siliciumtechnologie bzw. Halbleitertechnologie herstellbar. Die Nutzung dieser Siliciumtechnologie ermöglicht es auch, sehr kleine Strukturen zu verwirklichen, wodurch mehrere Sensoren auf dem Substrat auf- bzw. untergebracht werden können.
Die Membrane sind vorzugsweise in einer Ebene und auf einer Seite des Substrates aufgebracht.
Durch die Aufbringung von zwei Heizsensoren und von zwei Temperatursensoren auf einem Substrat werden zwei Brückenzweige geschaffen, durch die sowohl die Menge des strömenden Mediums als auch deren Strömungsrichtung ermittelt werden.

Die Realisierung dünner Membrane schützen die Sensoren und ermöglicht zudem, daß der/die Heizsensoren sowie der/die Temperatursensoren gleiche thermische Ansprechzeiten aufweisen. Durch eine geeignete Wahl des Abstandes zwischen dem Heizsensor und dem Temperatursensor wird eine Beeinflussung des Heizsensors auf den Temperatursensor und umgekehrt ausgeschlossen. Hierzu wird neben der guten Isolation der dünnen Membranen zusätzlich durch verbleibende Stege am Substrat die Wärme an die Umgebung abgegeben. Zu diesem Zweck wird das Substrat auf einem Substratträger, vorzugsweise eine gut wärmeleitende Keramik, aufgeklebt. Die Keramik selbst wird mittels Wärmeleitkleber, der mit kleinen Kugeln definierter Stärke gefüllt ist, auf einen Kühlkörper, vorzugsweise Aluminiumkühlkörper, geklebt, der mittels Rippen die Wärme an die Umgebungsluft abgibt. Die Kügelchen haben einerseits die Aufgabe, eine von Modul zu Modul gleichbleibende Dicke zu gewährleisten, d. h. eine bestimmte Höhentoleranz sowie eine gleichbleibende Wärmeabfuhr.

Auch können notwendige Trimmwiderstände zum Ausgleich von Heizsensorabweichungen und/oder auch erforderliche Lastwiderstände einer Brückenschaltung auf dem Substrat untergebracht werden, wodurch das Meßelement als ein Modul geschaffen wird.

Anhand eines Ausführungsbeispiels mit Zeichnung soll die Erfindung näher erläutert werden. Es zeigt:
Figur 1
   eine Draufsicht auf ein Meßelement,
Figur 2
   eine Schnittdarstellung I-I durch das Meßelement,
Fig. 2a
   eine Ansicht zur Befestigung des Meßelementes mit einem Kühlkörper
Figur 3
   eine weitere Variante des Meßelementes in Draufsicht.
Figur 4
   eine Schaltungsanordnung des Meßelementes

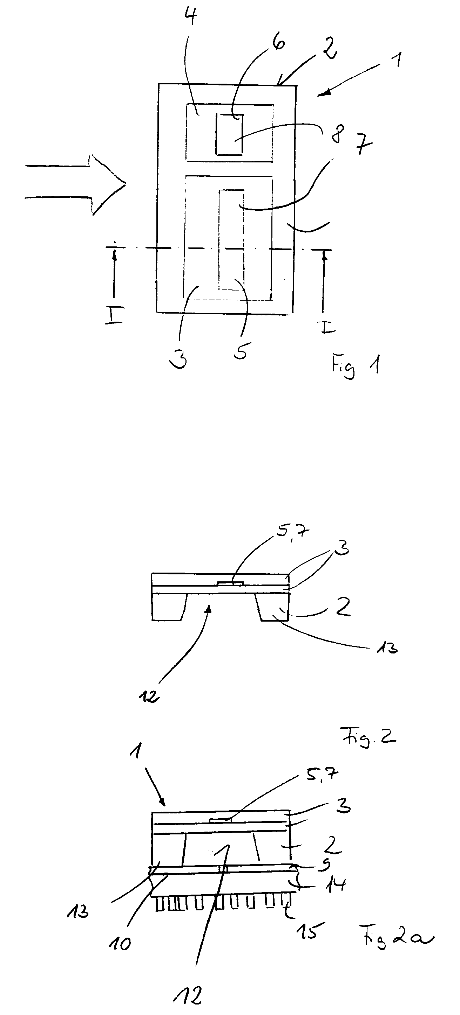

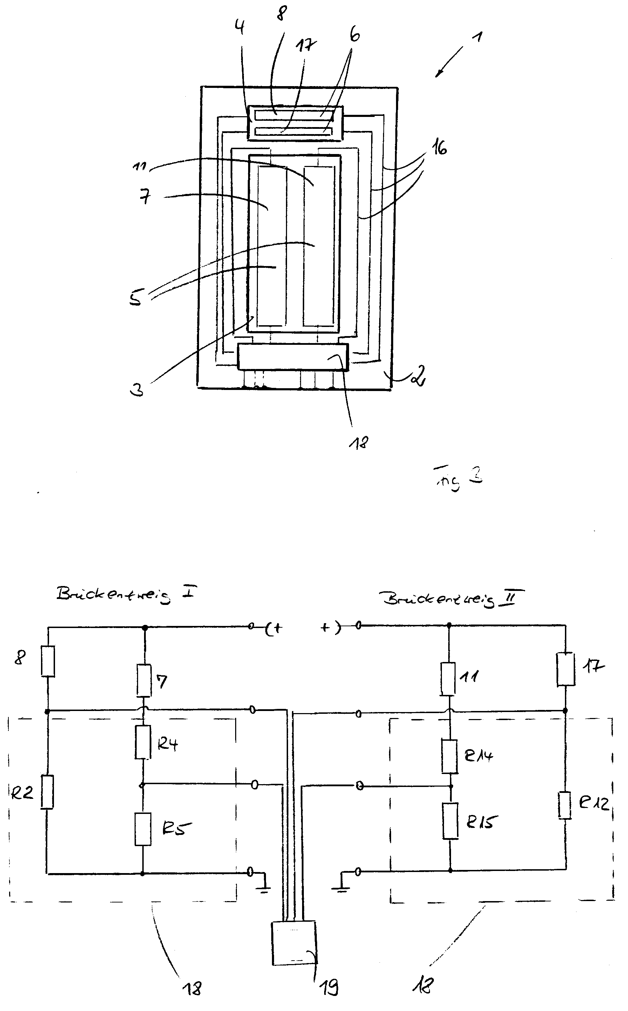

In Figur 1 ist die Draufsicht eines Meßelementes 1 in einfacher Ausführung dargestellt. Dieses Meßelement 1 weist dabei ein Substrat 2 auf, auf dem eine Membran 3 sowie eine weitere Membran 4 aufgebracht sind. In den Membranen 3 und 4 sind jeweils eine Schicht 5 und eine Schicht 6 eingebracht. Diese Schicht 5 stellt dabei einen Heizsensor 7 dar, die Schicht 6 einen Temperatursensor 8. Das Material der Schichten 5, 6 ist vorzugsweise Nickel. Das Substrat 2 ist vorzugsweise Silicium, wodurch in bekannter Art und Weise mittels Siliciumtechnologie die Membranen 3 und 4 auf dieses Siliciumsubstrat 2 aufgebracht werden. Die Membrane 3 und 4 sind Siliciumoxydschichten, wodurch sie eine geringe Wärmekapazität besitzen und dienen zugleich als Schutzschicht für die Sensoren 7, 8.

Figur 2 zeigt das Meßelement 1 im Schnitt I-I, zur besseren Verdeutlichung der Anordnung des Heizsensors 7 in der Membran 3 bzw. des dahinter liegenden Temperatursensors 8 in der Membran 4, was der Übersicht halber nicht in die Figur 2 eingetragen ist. Damit der Heizsensor 7 und der Temperatursensor 8 ein strömendes Medium (Pfeil in Fig. 1) detektieren können, weist das Substrat 2 einen freien Bereich 12 auf. Dieser Bereich 12 ist bis zu den Membranen 3 bzw. 4 hin vorzugsweise weggeätzt. Verbleibende Stege 13 des Substrates 2 leiten zusätzlich die Wärme der Sensoren 7, 8 an die Umgebung ab.

Wie aus Figur 2 a ersichtlich, wird das Substrat 2 auf einem weiteren Träger 9 mit guten wärmeleitenden Eigenschaften befestigt. Der Träger 9 ist dabei vorzugsweise eine Keramik und mit einem Befestigungsmaterial 10, einem Wärmeleitkleber, auf einem Kühlkörper 14 geklebt.

Der Wärmeleitkleber 10 besitzt kleine Kugeln (nicht dargestellt) mit definierter Dicke, wodurch eine gleichbleibende Dicke zur Gewährleistung einer bestimmten Höhentoleranz eingehalten wird und zusätzlich eine gleichbleibende Wärmeabfuhr erfolgt. Am Kühlkörper 14, besipielsweise aus Aluminium, befinden sich in vorteilhafter Art und Weise Rippen 15, um eine erhöhte Wärmeabgabe an die Umgebung zu realisieren.

Eine weitere Ausführungsform des Meßelementes 1 ist in Figur 3 dargestellt. Mit Hilfe der Siliciumtechnologie ist es möglich, sehr kleine Strukturen zu verwirklichen, so daß mehrere Heizsensoren 7, 11 und Temperatursensoren 8, 17 auf einem Substrat 2 untergebracht werden können. Vorzugsweise sind zwei Heizsensoren 7, 11 in der Membran 3 eingebracht, während in der Membran 4 sich die beiden Temperatursensoren 8, 17 befinden. Dazu werden zwei leitende Schichten 5 und zwei Leitende Schichten 6 in die Membranen 3 bzw. 4 eingebracht. So sind auf dem Substrat 2 Temperatursensoren 8, 17 mit beispielsweise je 2000 Ω, die Heizsensoren 7, 11 mit jeweils 50 Ω sowie die elektrischen Anschlußleitungen bzw. Leiterbahnen 16 untergebracht. Wahlweise können auch noch zusätzliche Trimmwiderstände (nicht dargestellt) zum Ausgleich der Heizsensorabweichungen sowie Lastwiderstände R2, R4, R5 sowie R12, R14, R15, die bekanntlich für eine Brückenschaltung benötigt werden, mit auf dem Substrat 2 aufgebracht werden, die der übersichtigkeitshalber mit 18 gekennzeichnet sind.

Die Nutzung von zwei Heizsensoren 7, 11 und zwei Temperatursensoren 8, 12 ist vorteilhaft, um auch die Strömungsrichtung eines strömenden Mediums zu messen (nicht dargestellt). Dies erfolgt dadurch, daß durch die Nutzung von zwei Heizsensoren 7, 11 und zwei Temperatursensoren 8, 17 zwei Brückenschaltungen I und II in das Meßsystem eingebunden sind. In bekannter Art und Weise sind dabei je ein Heizsensor 7 mit einem Temperatursensor 8 sowie den Lastwiderständen R2, R4, R5 zu einer Brückenschaltung I und der Heizsensor 11 mit dem Temperatursensor 17 sowie den Lastwiderständen R12, R14, R15 zu der anderen Brückenschaltung II verschaltet (Fig.4). Über die jeweiligen Brückendiagonalen und damit verbunden den Brückennullzweigen erfolgt in herkömmlicher Art der Abgriff für die Meßauswertung bzw. Regelung in einer Elektronikeinheit 19. Der dem strömenden Medium zuerst ausgesetzte Heizsensor 7 oder 11 bewirkt dabei ein anderes Brückenungleichgewicht als der dem Medium als zweites ausgesetzte Heizsensor 11 oder 7. Wird beispielsweise eine Brückenschaltung I des ersten Heizsensors 7 ein kleineres Brückenungleichgewicht gemessen als in der Brückenschaltung II des zweiten Heizsensors 11, so ist der zweite Heizsensor 11 dem strömenden Medium als erster ausgesetzt, wodurch sich die Strömungsrichtung ermitteln läßt. Befindet sich der zweite Heizsensor 11 am linken Rand des Substrates 2 bzw. der Membran 3, so kommt die Strömung aus der Richtung, in die der Heizsensor 11 weist.

Zur Dedektierung von Rückströmung wird der bekannte isolierende Grenzschichteffekt ausgenutzt. Um auch kleinere Rückströmungen dedektieren zu können, werden die beiden Heizsensoren 7, 11 möglichst nahe beieinanderliegend angeordnet. Dabei muß berücksichtigt werden, daß kein thermisches Überspringen vom vorderen ersten Heizsensor 7 auf den hinteren zweiten Heizsensor 11 durch Wärmeleitung stattfindet. Ebenfalls ist zu beachten, daß auch die Temperatursensoren 8, 17 durch die Heizsensoren 7, 11 nicht beeinflußt werden. In vorteilhafter Ausführung weist das Meßelement 1 die Außenabmaße von 7,2 mm x 3,2 mm auf. Die länglichen Heizsensoren 7, 11 liegen in etwa mittig, jedoch parallel zueinander im Abstand von ca. 0,2 mm auf bzw. in der Membran 3. Die Breite der einzelnen Heizsensoren 7, 11 beträgt in etwa 300 µm. Die Länge der vorzugsweise gleichfalls parallel zueinander liegenden Temperatursensoren 8, 17 ergibt sich vorzugsweise aus den äußeren Maßen der zur Schaffung der Heizsensoren 7, 11 auf die Membran 3 aufgetragenen Nickelschichten 5.
Ausschlaggebend für die Konturen der Heizsensoren 7, 11 und der Temperatursensoren 8, 17 sowie des Meßelementes 1 ist, daß die Anordnung auf dem Meßelement 1 die Richtungsgeschwindigkeit von Rückströmungen und deren Richtung detektieren kann.

Wie bereits erwähnt, wird das Meßelement 1 in Sliciumstechnologie hergestellt.

Das Verfahren zur Herstellung läuft dabei wie folgt ab.

Die wichtigsten Schritte sind: 1. Schaffung einer Siliciumschicht als Substrat 2 (0,4 mm).
2. Aufbringen einer ersten Siliciumoxydschicht (0,5 µm) als Teil der getrennten Membranen 3, 4.
3. Aufbringen der Nickelschichten 5und 6, aus denen sich die Widerstandswerte der Sensoren 7, 11 und 8, 17 bestimmen.
4. Aufbringen einer weiteren Siliciumoxydschicht (0,5 µm) als zweiter Teil der Membranen 3, 4.
4.1. Bei Nutzung von Leiterbahnen 16 werden diese auf das Substrat 2 aufgeätzt oder aufgeklebt.
5. Ausätzen des Substrates 2 im vorbestimmten Bereich 12, so daß die Membranen 3, 4 frei liegen.
   Für eine bessere Wärmeabführung erfolgt danach
6. das Aufbringen des verbleibenden Siliciumträgerrahmens/-stege 13 auf die Keramikplatte 9 und Einarbeiten einer Druckausgleichsbohrung zum Schutz der Membranen 3,4 sowie
7. das Aufbringen der Keramikplatte 9 mittels Wärmeleitkleber 10 auf den Aluminiumkühlkörper 13.

Die Dicke der Membranen 3, 4 kann auch im Bereich von 0,5 µm bis 4 µm liegen.

## Patentansprüche

1. Meßelement für eine Vorrichtung zur Bestimmung der Masse eines strömenden Mediums, inbesondere für einen Luftmassensensor mit einem Substrat, **dadurch gekennzeichnet**, daß auf dem Substrat (2) zwei separate Membrane (3, 4) aufgebracht sind, wobei die eine Membran (3) mindestens einen Heizsensor (7,11) und die andere Membran (4) mindestens einen Temperatursensor (8.17) trägt.

2. Meßelement nach Anspruch 1, **dadurch gekennzeichnet**, daß das Substrat (2) ein Halbleiter ist.

3. Meßelement nach Anspruch 2, **dadurch gekennzeichnet**, daß der Halbleiter Silicium ist.

4. Meßelement nach einem der vorgenannten Ansprüche, **dadurch gekennzeichnet**, daß die Membranen (3, 4) aus Siliciumoxyd bestehen und eine Dicke von 0,5 µm bis 4 µm aufweisen.

5. Meßelement nach einem der vorgenannten Ansprüche, **dadurch gekennzeichnet**, daß die Membranen (3, 4) aus Siliciumoxyd bestehen und eine Dicke von 1 µm aufweisen.

6. Meßelement nach einem der vorgenannten Ansprüche, **dadurch gekennzeichnet**, daß die Membranen (3, 4) den Heizsensor (7, 11) und den Temperatursensor (8,12) umschließen.

7. Meßelement nach einem der vorgenannten Ansprüche, **dadurch gekennzeichnet**, daß das Substrat (2) unterhalb der Membranen (3, 4) einem freien Bereich (12) aufweist.

8. Meßelement nach einem der vorgenannten Ansprüche, **dadurch gekennzeichnet**, daß das Substrat (2) auf einem Substratträger (9), der ein Keramik ist, aufgebracht ist.

9. Meßelement nach einem der vorgenannten Ansprüche, **dadurch gekennzeichnet**, daß auf dem Substrat (2) Leiterbahnen (16) und zusätzliche Widerstände (18) aufgebracht sind.

10. Verfahren zur Herstellung eines Meßelementes nach Anspruch 1, **dadurch gekennzeichnet**, daß in Halbleitertechnologie auf ein Substrat (2) eine Teilschicht von zwei voneinander getrennten Membranen (3, 4) aufgetragen wird, auf einer dieser voneinander getrennten Teilschichten mindestens eine leitende Schicht (5) zur Schaffung einer Heizsensors (7) und auf die andere mindestens eine leitende Schicht (6) zur Schaffung eines Temperatursensors (8) aufgebracht wird, die danach beide von einer weiteren Teilschicht der Membranen (3, 4) abgedeckt werden.

11. Verfahren nach Anspruch 10, **dadurch gekennzeichnet**, daß das Substrat (2) in einem vorbestimmten Bereich (12) bis zu den Membranen (3, 4) weggeätzt wird.

12. Verfahren nach Anspruch 11, **dadurch gekennzeichnet**, daß das Substrat (2) auf einem Substratträger (9) aufgebracht wird.

13. Verfahren nach einem der vorgenannten Ansprüche, **dadurch gekennzeichnet**, daß der Substratträger (9) über einen Wärmeleitkleber (10) auf einem Kühlkörper (11) geklebt ist.
